# EUROPEAN PATENT APPLICATION

(11) **EP 3 113 018 A1**
(43) Date of publication of application: **04.01.2017**
(21) Application number: 14884189.3
(22) Date of filing: 18.06.2014
(51) Int. Cl.: G06F 9/445

(54) **METHOD AND APPARATUS FOR RUNNING VERSION FILE**

(30) Priority: 27.02.2014 CN 201410068981
(71) Applicant: ZTE Corporation, Shenzhen, Guangdong 518057 (CN)
(72) Inventor: YU, Guangbo, Shenzhen Guangdong 518057 (CN)
(74) Representative: Quinterno, Giuseppe
(86) International application number: PCT/CN2014/080260
(87) International publication number: WO 2015/127730

(57) **Abstract**

Provided are a method and device for running a version file, wherein the method includes that: a file system type of a current file system in a flash is identified in system boot loader software, and the file system is initialized according to the file system type; a file system type supported by a version file to be run is acquired; whether the current file system supports the version file to be run or not is judged according to the file system type of the current file system and the file system type supported by the version file to be run, and when a judgment result is that the current file system supports the version file to be run, the version file to be run is run; otherwise, all files in the file system are read and stored in a memory and/or a storage area, not managed by the file system, in the flash, the file system is formatted, the file system is reinitialized according to the file system type supported by the version file to be run, the stored files are stored in the file system, and the version file to be run is run.

## Description

### Technical Field

The present disclosure relates to the field of computers and communication, and in particular to a method and device for running a version file.

### Background

In order to realize a new function or meet a new requirement, a product version is required to be upgraded, and moreover, there may exist cross-platform or cross-file system version upgrade. For example, a vxWorks operating system is originally adopted, and is required to be replaced with a linux operating system to support some new functions; and for another example, because of platforms, there may exist a condition that a new version file system is different from an old version file system. For upgrating software versions of these systems, it is required to ensure, under the condition that all hardware is kept unchanged, that: versions and all data in the file systems should be prevented from being lost before and after upgrading; upgrading operation is simple and convenient, and online upgrading is supported; and an old version may be directly and smoothly upgraded to a new software version without changing the old version under the condition that the old version have been used, and the new version may also be directly and smoothly swapped back to the old version.

In current version management, a version file and system data may be stored separately (the version file is stored in a flash and the system data is stored in a file system), and the version file and the system data may both be stored in the file system. No matter which storage manner is adopted, if new and old versions are run in different file systems respectively and a new system boot loader may not identify the old file system, it is necessary to upload data in the file system to a network management server or a computer by the old system, and then the new system boot loader is upgraded. After the new system boot loader is started, a primary version file is acquired from the network management server or the computer, then the primary version is run, and the data which is backed up in advance is recovered in the primary version. However, such a method has the defects that: the primary version may not be directly upgraded in the old version, and the primary version is required to be upgraded in the new system boot loader, so that operation is complex and an online upgrading requirement may not be met; in addition, the new and old file systems are incompatible, the data may not be stored, it is necessary to back up the data to another server in advance, and then the data may be recovered merely after the new primary version is run, so that operation is complex and a batch operation requirement is unlikely to be met; and if the new version is required to be swapped back to the old version, there may exist the same problem in upgrading.

In a related art, a version file and data may also be temporarily stored in a system memory or a flash, and in a new boot loader version, and the data in the memory or the flash is read and rewritten into a file system. Such a method has the defects that: an address of data reserved in an old version is required to be consistent with an address of data acquired in new boot loader, so that it is necessary to perform customized modification on the old version and the new boot loader, that is, the old version is required to be upgraded to a temporary version and then to the new version, and operation is complex; and similarly, if the new version is required to be swapped back to the old version, it is also necessary to modify an old boot loader.

### Summary

For the problem of complex operation during upgrading of a version file in the related art, the present disclosure provides a method and device for running a version file, so as to at least solve the problem.

According to an embodiment of the present disclosure, a method for running a version file is provided, including: identifying in system boot loader software, a file system type of a current file system in a flash, and initializing the file system according to the file system type; acquiring a file system type supported by a version file to be run; judging whether the current file system supports the version file to be run or not according to the file system type of the current file system and the file system type supported by the version file to be run, and when a judgment result is that the current file system supports the version file to be run, running the version file to be run; otherwise, reading all files in the file system; storing the read files in a memory and/or a storage area, not managed by the file system, in the flash; formatting the file system; reinitializing the file system according to the file system type supported by the version file to be run; storing the stored files in the file system; and running the version file to be run.

In an example embodiment, identifying the file system type of the current file system in the flash includes: reading a feature structure of the current file system, and identifying the file system type of the current file system according to a corresponding relationship between a feature structure and a file system type.

In an example embodiment, the version file to be run is stored in the file system; and acquiring the file system type supported by the version file to be run includes: acquiring a version name of the version file to be run, reading the version file to be run from the file system according to the version name, and reading the file system type supported by the version file to be run from a version header of the version file to be run.

In an example embodiment, the version file to be run is stored in an area of the flash; and acquiring the file system type supported by the version file to be run includes: acquiring, through a flash parameter area, the area where the version file to be run is stored in the flash; reading the version file to be run from the area, and reading the file system type supported by the version file to be run from a version header of the version file to be run.

In an example embodiment, the version file to be run is stored on a server; and acquiring the file system type supported by the version file to be run includes: acquiring the version file to be run from the server, and reading the file system type supported by the version file to be run from a version header of the version file to be run.

In an example embodiment, the version file to be run is stored on a file system of a master main control board; and acquiring the file system type supported by the version file to be run includes: acquiring through inter-board communication, by a standby main control board or a line card, the version file to be run; and reading the file system type supported by the version file to be run from a version header of the version file to be run.

In an example embodiment, when acquiring the file system type supported by the version file to be run, the method further including: acquiring version information of the version file to be run; checking the version file to be run; acquiring a backup version file if the version information of the version file to be run fails to be acquired or the version file to be run fails to be checked; checking the backup version file; and setting the backup version file to be the version file to be run in case of successful checking.

In an example embodiment, reading all the files in the file system, and storing the read files in the memory includes: mapping the memory into a memory file system, and copying all the files in the file system into the memory file system.

In an example embodiment, reading all files in the file system, and storing the read files in the memory includes: compressing the files in the whole file directory of the file system into an image file, and storing the image file in the memory; and storing the stored files in the file system includes: decompressing the image file in the memory, and storing the decompressed files in the file system.

In an example embodiment, the image file is stored in a fixed address memory, or is stored in a dynamic memory.

In an example embodiment, before identifying the file system type of the current file system in the flash, further including: downloading and storing a new primary version file in the file system, and upgrading a new system boot loader software version; and activating the new primary version file to be the version file to be run, and restarting a system.

According to another embodiment of the present disclosure, a device for running a version file is provided, including: an identification component, configured to identify in system boot loader software, a file system type of a current file system in a flash; an initialization component, configured to initialize the file system according to the file system type; an acquisition component, configured to acquire a file system type supported by a version file to be run; a judgment component, configured to judge whether the current file system supports the version file to be run or not according to the file system type of the current file system and the file system type supported by the version file to be run, and when a judgment result is that the current file system supports the version file to be run, trigger an execution component, otherwise trigger a formatting component; the formatting component, configured to read all files in the file system, and store the read files in a memory and/or a storage area, not managed by the file system, in the flash; format the file system; and trigger the initialization component to reinitialize the file system according to the file system type supported by the version file to be run; a storage component, configured to store the stored files in the file system after the initialization component reinitializes the file system, and trigger the execution component; and the execution component, configured to run the version file to be run.

Through the present disclosure, the file system type of the current file system and the file system type supported by the version file to be run are automatically identified; under a condition that the current file system does not support the version file to be run, the files in the file system are cached, the file system is formatted, the file system is reinitialized according to the file system type supported by the version file to be run, the cached data is rewritten into the file system, and the version file to be run is run, so that the problem of complex operation during upgrading of the version file in the related art is solved, the file system can be automatically identified and initialized during running the new and old version files, and meanwhile, loss of data stored in a flash area managed by the file system is avoided.

### Brief Description of the Drawings

The drawings described here are adopted to provide further understanding of the present disclosure, and form a part of the present disclosure. Schematic embodiments of the present disclosure and description thereof are adopted to explain the present disclosure and not intended to form improper limits to the present disclosure. In the drawings:
Fig. 1 is a flowchart of a method for running a version file according to an embodiment of the present disclosure;
Fig. 2 is a flowchart of a method for running a version file according to an optional embodiment of the present disclosure; and
Fig. 3 is a structure diagram of a device for running a version file according to an embodiment of the present disclosure.

### Detailed Description of the Embodiments

The present disclosure will be described below with reference to the drawings and embodiments in detail. It is important to note that the embodiments in the present disclosure and characteristics in the embodiments may be combined under the condition of no conflicts.

Since file system data in an area managed by a file system in a flash, and file systems adopted for different versions are different, data, written into a file system, of an old version may be unidentifiable during running a new version file, and the data in an old version file may not be read. Similarly, data written during running the new version file is also unidentifiable in the old version file. Therefore, the data in all the file systems may not be read and get lost during upgrading to the new version or swapping back to the old version in a version upgrading process. For the problem, the embodiment of the present disclosure provides a solution for running a version file, so as to solve the problem.

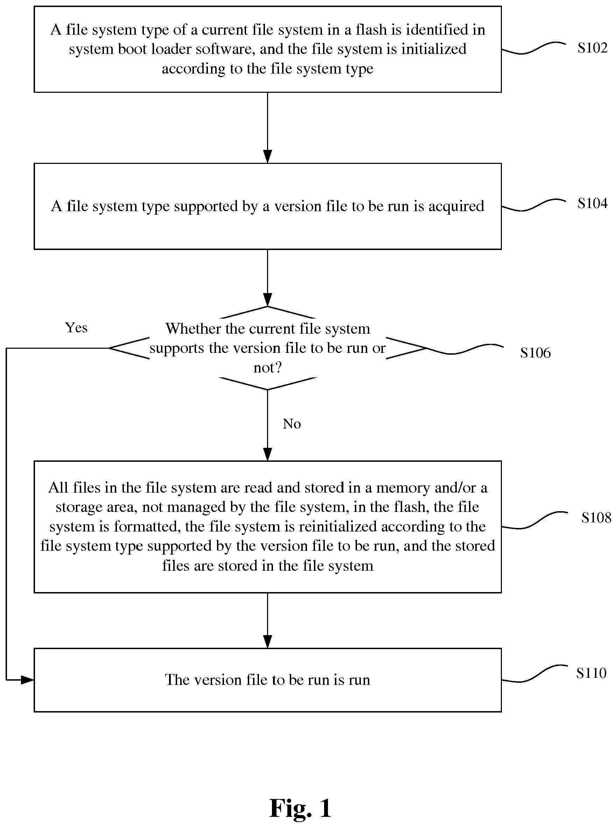

Fig. 1 is a flowchart of a method for running a version file according to an embodiment of the present disclosure, and as shown in Fig. 1, the method for running the version file according to the embodiment of the present disclosure mainly includes the following Step 102-Step 110.

Step 102: a file system type of a current file system in a flash is identified in system boot loader software, and the file system is initialized according to the file system type.

Feature structures of different versions file systems are different, so that the operation that the file system type of the current file system in the flash is identified in Step 102 may include that: a feature structure of the current file system is read, and the file system type of the current file system is identified according to a corresponding relationship between a feature structure and a file system type.

Of course, the operation is not limited, and the file system type of the file system may also be determined according to other information, such as version information of a version file, and there are no limits specifically made.

Step 104: a file system type supported by a version file to be run is acquired.

In a specific implementation process, different implementation modes may be adopted for Step 104 according to different storage positions of the version file to be run.

For example, when the version file to be run is stored in the file system, the step that the file system type supported by the version file to be run is acquired may include that: a version name of the version file to be run is acquired, the version file to be run is read from the file system according to the version name, and the file system type supported by the version file to be run is read from a version header of the version file to be run.

When the version file to be run is stored in an area of the flash, the step that the file system type supported by the version file to be run is acquired may include that: the area where the version file to be run is stored in the flash is acquired through a flash parameter area, the version file to be run is read from the area, and the file system type supported by the version file to be run is read from a version header of the version file to be run.

When the version file to be run is stored on a server, the step that the file system type supported by the version file to be run is acquired may include that: the version file to be run is acquired from the server, and the file system type supported by the version file to be run is read from a version header of the version file to be run.

When the version file to be run is stored on a file system of a master main control board, the step that the file system type supported by the version file to be run is acquired may include that: a standby main control board or a line card acquires, through inter-board communication, the version file to be run; and reads the file system type supported by the version file to be run from a version header of the version file to be run.

Optionally, in order to ensure normal running of the version file to be run, when the file system type supported by the version file to be run is acquired, the method may further include that: version information of the version file to be run is acquired; the version file to be run is checked; a backup version file is acquired if the version information of the version file to be run is failed to be acquired or the version file to be run is failed to be checked; the backup version file is checked; and the backup version file is set to be the version file to be run in case of successful checking.

Step 106: whether the current file system supports the version file to be run or not is judged according to the file system type of the current file system and the file system type supported by the version file to be run, and when a judgment result is that the current file system supports the version file to be run, Step 110 is executed, otherwise Step 108 is executed.

Step 108: all files in the file system are read and stored in a memory and/or a storage area, not managed by the file system, in the flash; the file system is formatted; the file system is reinitialized according to the file system type supported by the version file to be run; and then the stored files are stored in the file system.

Step 110: the version file to be run is run.

During a practical application, there may mainly exist two conditions of storing content in the flash, the first condition is that all areas of the flash are managed by the file system, and under such a condition, all the files in the file system are stored in a memory; and the second is that a part of the areas of the flash are managed by the file system and the other part of areas are naked and not managed by the file system, and under such a condition, all the files in the file system may be stored in the storage areas, not managed by the file system, in the flash; or, all the files in the file system may also be stored in the memory and the storage areas, not managed by the file system, in the flash.

When all the files in the file system are stored in the memory, the memory may be mapped into a memory file system during storing all the files, and all the files in the file system are copied into the memory file system.

Or, the files of the whole file directory may also be compressed for storage, and then the step that all the files in the file system are read and stored in the memory may include that: the files in the whole file directory of the file system are compressed into an image file and then stored the image file in the memory; and the step that the stored files are stored in the file system may include that: the image file stored in the memory are decompressed and then stored in the file system. Optionally, the image file may be stored in a fixed address memory, or may be stored in a dynamic memory.

Optionally, the embodiment of the present disclosure may be executed after upgrading of the file system, and then before the step that the file system type of the current file system in the flash is identified, the method may further include that: a new primary version file is downloaded and stored in the file system, and a new system boot loader software version is upgraded at the same time; and the new primary version file is activated into the version file to be run, and the system is restarted.

Management structures of different versions file systems are different, so that data structures of different versions file systems in the flash are also different, and when version software to be run does not support a certain version file system, data (stored in the flash) in the file system may not be read. Therefore, in the embodiment of the present disclosure, whether a current version to be run may identify the file system data in the flash or not (that is, whether the current file system may support the version file to be run or not) is automatically identified according to characteristics of the data of different file systems in the flash, the version file to be run is directly run when a judgment result is that the current file system supports the version file to be run, and when a judgment result is that the current file system does not support the version file to be run, the data in the current file system is read into the memory (or the flash area not managed by the file system) for temporary storage, then an area managed by the file system in the flash is formatted, initialization is performed according to a file system type in a new version file, and then the cached data is rewritten into a flash area managed by a new file system. Therefore, the file system can be automatically identified and initialized during running of the new and old version files after upgrading to the new version, and meanwhile, loss of the data stored in the flash area managed by the file system may be avoided.

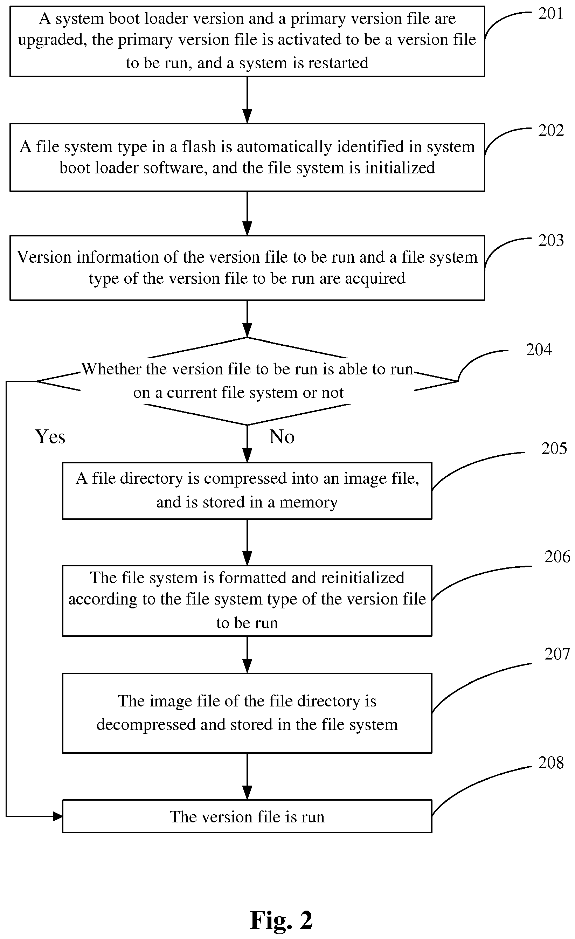

Fig. 2 is a flowchart of a method for running a version file according to an optional embodiment of the present disclosure, and as shown in Fig. 2, the method for running a version file in the optional embodiment mainly includes the following Step 201-Step 208.

Step 201: a new primary version file is remotely downloaded on line and stored in a file system according to a current version upgrading method and steps, a new system boot loader software version is upgraded at the same time, the new primary version file is activated to be a version file to be run, and the system is restarted.

Wherein, a manner for managing the new primary version file is determined according to a version management strategy of a current system, the new primary version file is automatically stored as a backup version file when there is an enough flash space in the system for supporting master and standby backup versions; and after the new primary version file is activated to be the version file to be run, an old primary version file is automatically changed into the backup version file. In such a way, after the new primary version file fails to be upgraded, the old version file still exists, and the old version file may be reactivated, thereby realizing a version swapping-back function. When the system includes another software version, such as a firmware version, besides the primary version file and the system boot loader software version, whether to upgrade these another software versions or not is determined according to the upgrading requirements of these another software versions, and is unrelated to a type of a file system of a current primary version and whether the primary version is upgraded and swapped back or not.

Step 202: a specific structure of a current file system area is read in the system boot loader software version to automatically identify a type of a file system in which an original version is run, and file system initialization operation is performed.

Step 203: a file name of the version file to be run is acquired through act.txt stored in the file system, a version header and version content of the version file to be run are read from the file system according to the file name. A data length and a version XOR checksum are stored in the version header of the version file to be run, and the version file to be run may be checked according to the information.

In Step 203, when act.txt fails to be read, or the file name of the version file to be run in act.txt does not exist, or content of the version file to be run fails to be checked, the backup version file is looked for in a primary version file directory, and when the backup version file is successfully checked, the backup version file is set to be the version file to be run, and a file name of the backup version file is stored in act.txt.

Step 204: a file system type supported by the version file to be run is acquired from the version header of the version file to be run, and the acquired file system type is compared with the file system type automatically identified in Step 202 to judge whether the current file system does not support the version file to be run or not (namely to judge whether the version file to be run may run on the current file system or not), Step 208 is executed when a judgment result is that the current file system supports the version file to be run, otherwise Step 205 is executed.

Step 205: the whole directory (including the version file to be run) of the current file system is completely compressed into an image file through a compression tool such as Izma, wherein such operation being universal, does not need to concern about which important files in which directories of the file system are required to be stored, and meanwhile, a directory in the new file system may be kept completely consistent with the directory in the old file system during recovery from the memory to the file system in Step 207; and the component may also be conveniently transplanted to the other projects.

In Step 205, the whole original file directory image occupies totally 32M, and merely occupies a few megabytes after being compressed by Izma, so that the memory of the system may meet the requirement for storing the image file of the file directory.

Step 206: the file system is reformatted according to the file system type, acquired in Step 204, supported by the version file to be run, and the file system is initialized, wherein a low-level flash formatting manner may be adopted for formatting operation on the file system, so that the formatting operation may be completely implemented.

Step 207: the image file of the file directory is acquired from the memory, and are directly stored in the new file system after being decompressed by a decompression tool Izma, and the version file to be run is also stored in the file system.

Step 208: the version file to be run is run.

When version swapping-back operation is required, Step 201 to Step 208 are repeated, but it is important to note that the system boot loader software version is not required to be upgraded in Step 201. The system boot loader software version adopted in the embodiment of the present disclosure supports two types of file systems, so that running of primary versions of the two types of file systems may be ensured.

From the above, according to the method for upgrading online a cross-file system version of the embodiment of the present disclosure, the file system type is automatically identified, and under the condition that the version file to be run is not able to be run in the current file system, all the files are temporally stored in the memory, then the file system is reformatted and initialized according to the file system type required by the version file to be run, and file data temporally stored in the memory is recovered to the file system at the same time, so that cross-file system online version upgrading and swapping-back and automatic data storage are implemented under the condition of finite memory and flash resources, there are no limits to upgrading operation, an upgrading speed is increased, manual operation is reduced, and user satisfaction is improved.

According to the embodiment of the present disclosure, a device for running a version file is further provided, which may be configured to implement the abovementioned method.

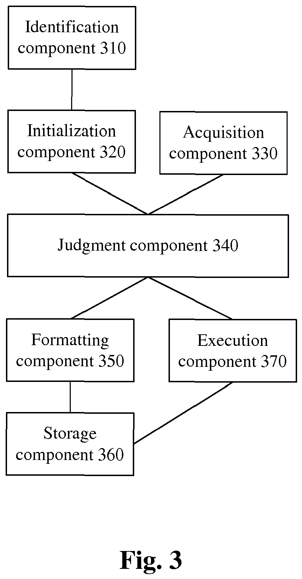

Fig. 3 is a structure diagram of a device for running a version file according to an embodiment of the present disclosure, and as shown in Fig. 3, the device mainly includes: an identification component 310, an initialization component 320, an acquisition component 330, a judgment component 340, a formatting component 350, a storage component 360 and an execution component 370, wherein the identification component 310 is configured to identify in system boot loader software, a file system type of a current file system in a flash; the initialization component 320 is configured to initialize the file system according to the file system type; the acquisition component 330 is configured to acquire a file system type supported by a version file to be run; the judgment component 340 is configured to judge whether the current file system supports the version file to be run or not according to the file system type of the current file system and the file system type supported by the version file to be run, and when a judgment result is that the current file system supports the version file to be run, trigger the execution component 370, otherwise trigger the formatting component 350; the formatting component 350 is configured to read all files in the file system, and store the read files in a memory and/or a storage area, not managed by the file system, in the flash, format the file system, and trigger the initialization component 320 to reinitialize the file system according to the file system type supported by the version file to be run; the storage component 360 is configured to store the stored files in the file system after the initialization component reinitializes the file system, and trigger the execution component 370; and the execution component 370 is configured to run the version file to be run.

Feature structures of different versions file systems are different, so that the identification component 310 may identify the file system type of the current file system in a manner of: a feature structure of the current file system is read, and the file system type of the current file system is identified according to a corresponding relationship between a feature structure and a file system type.

In a specific implementation process, the acquisition component 330 may acquire the file system type supported by the version file to be run in the following manners according to different storage positions of the version file to be run:
(1) when the version file to be run is stored in the file system, a version name of the version file to be run is acquired, the version file to be run is read from the file system according to the version name, and the file system type supported by the version file to be run is read from a version header of the version file to be run;
(2) when the version file to be run is stored in an area of the flash, the area where the version file to be run is stored in the flash is acquired through a flash parameter area, the version file to be run is read from the area, and the file system type supported by the version file to be run is read from a version header of the version file to be run;
(3) when the version file to be run is stored on a server, the version file to be run is acquired from the server, and the file system type supported by the version file to be run is read from a version header of the version file to be run; and
(4) when the version file to be run is stored on a file system of a master main control board, a standby main control board or a line card acquires the version file to be run through inter-board communication, and reads the file system type supported by the version file to be run from a version header of the version file to be run.

Optionally, in order to ensure normal running of the version file to be run, when the file system type supported by the version file to be run is acquired, the device may further include that: a setting component, configured to acquire version information of the version file to be run; check the version file to be run; acquire a backup version file if the version information of the version file to be run fails to be acquired or the version file to be run fails to be checked; check the backup version file; and set the backup version file to be the version file to be run in case of successful checking.

During a practical application, there may mainly exist two conditions of storing content in the flash, the first is that all areas of the flash are managed by the file system, and under such a condition, all the files in the file system are stored in a memory; and the second is that a part of the areas of the flash are managed by the file system and the other part of areas are naked and not managed by the file system, and under such a condition, all the files in the file system may be stored in the storage areas, not managed by the file system, in the flash, or, all the files in the file system may also be stored in the memory and the storage areas, not managed by the file system, in the flash.

When the formatting component 340 stores all the files in the file system in the memory, the formatting component 340 may map the memory into a memory file system during performing storing operation and copy all the files in the file system into the memory file system.

Or, the files of the whole file directory may also be compressed for storage, and then the operation that the formatting component 340 reads all the files in the file system, and stores the read files in the memory may be implemented in a manner as follows: the files in the whole file directory of the file system are compressed into an image file and then stored in the memory; and the step that the stored files are stored in the file system may include that: the image files stored in the memory are decompressed and then stored in the file system. Optionally, the image file may be stored in a fixed address memory, or may be stored in a dynamic memory.

Optionally, the embodiment of the present disclosure may be executed after upgrading of the file system, and then the device may further include that: a downloading component, configured to download and store a new primary version file in the file system, and upgrade a new system boot loader software version at the same time; and an activation component, configured to activate the new primary version file to be the version file to be run, and restart a system.

Obviously, those skilled in the art should know that each component or step of the present disclosure may be implemented by a universal computing device, and the components or steps may be concentrated on a single computing device or distributed on a network formed by a plurality of computing devices, and may optionally be implemented by programmable codes executable for the computing devices, so that the components or steps may be stored in a storage device for execution with the computing devices, the shown or described steps may be executed in sequences different from those described here in some circumstances, or may form each integrated circuit component respectively, or multiple components or steps therein may form a single integrated circuit component for implementation. As a consequence, the present disclosure is not limited to any specific hardware and software combination.

The above is only the preferred embodiment of the present disclosure and not intended to limit the present disclosure, and for those skilled in the art, the present disclosure may have various modifications and variations. Any modifications, equivalent replacements, improvements and the like within the spirit and principle of the present disclosure shall fall within the scope of protection of the present disclosure.

### Industrial Applicability

According to the embodiment of the present disclosure, a file system type of a current file system and a file system type supported by a version file are automatically identified, files in the file system are cached under the condition that the current file system does not support the version file to be run, the file system is formatted, the file system is reinitialized according to the file system type supported by the version file to be run, the cached data is rewritten into the file system, and the version file to be run is run, so that the problem of complex operation during upgrading of the version file in the related art is solved, the file system can be automatically identified and initialized during running of new and old version files, and meanwhile, loss of data stored in a flash area managed by the file system is avoided. Therefore, industrial practicability is achieved.

## Claims

1. A method for running a version file, comprising:
identifying in system boot loader software, a file system type of a current file system in a flash, and initializing the file system according to the file system type;
acquiring a file system type supported by a version file to be run;
judging whether the current file system supports the version file to be run or not according to the file system type of the current file system and the file system type supported by the version file to be run, and when a judgment result is that the current file system supports the version file to be run, running the version file to be run; otherwise,
reading all files in the file system; storing the read files in a memory and/or a storage area, not managed by the file system, in the flash; formatting the file system; reinitializing the file system according to the file system type supported by the version file to be run; storing the stored files in the file system; and running the version file to be run.

2. The method as claimed in claim 1, wherein identifying the file system type of the current file system in the flash comprises:
reading a feature structure of the current file system, and identifying the file system type of the current file system according to a corresponding relationship between a feature structure and a file system type.

3. The method as claimed in claim 1, wherein
the version file to be run is stored in the file system; and
acquiring the file system type supported by the version file to be run comprises: acquiring a version name of the version file to be run, reading the version file to be run from the file system according to the version name, and reading the file system type supported by the version file to be run from a version header of the version file to be run.

4. The method as claimed in claim 1, wherein
the version file to be run is stored in an area of the flash; and
acquiring the file system type supported by the version file to be run comprises: acquiring, through a flash parameter area, the area where the version file to be run is stored in the flash; reading the version file to be run from the area, and reading the file system type supported by the version file to be run from a version header of the version file to be run.

5. The method as claimed in claim 1, wherein
the version file to be run is stored on a server; and
acquiring the file system type supported by the version file to be run comprises: acquiring the version file to be run from the server, and reading the file system type supported by the version file to be run from a version header of the version file to be run.

6. The method as claimed in claim 1, wherein
the version file to be run is stored on a file system of a master main control board; and
acquiring the file system type supported by the version file to be run comprises: acquiring through inter-board communication, by a standby main control board or a line card, the version file to be run; and reading the file system type supported by the version file to be run from a version header of the version file to be run.

7. The method as claimed in claim 1, when acquiring the file system type supported by the version file to be run, further comprising: acquiring version information of the version file to be run; checking the version file to be run; acquiring a backup version file if the version information of the version file to be run fails to be acquired or the version file to be run fails to be checked; checking the backup version file; and setting the backup version file to be the version file to be run in case of successful checking.

8. The method as claimed in claim 1, wherein reading all the files in the file system, and storing the read files in the memory comprises: mapping the memory into a memory file system, and copying all the files in the file system into the memory file system.

9. The method as claimed in claim 1, wherein
reading all files in the file system, and storing the read files in the memory comprises: compressing the files in the whole file directory of the file system into an image file, and storing the image file in the memory; and
storing the stored files in the file system comprises: decompressing the image file in the memory, and storing the decompressed files in the file system.

10. The method as claimed in claim 9, wherein the image file is stored in a fixed address memory, or is stored in a dynamic memory.

11. The method as claimed in claims 1 to 10, before identifying the file system type of the current file system in the flash, further comprising:
downloading and storing a new primary version file in the file system, and upgrading a new system boot loader software version; and
activating the new primary version file to be the version file to be run, and restarting a system.

12. A device for running a version file, comprising:
an identification component, configured to identify in system boot loader software, a file system type of a current file system in a flash;
an initialization component, configured to initialize the file system according to the file system type;
an acquisition component, configured to acquire a file system type supported by a version file to be run;
a judgment component, configured to judge whether the current file system supports the version file to be run or not according to the file system type of the current file system and the file system type supported by the version file to be run, and when a judgment result is that the current file system supports the version file to be run, trigger an execution component, otherwise trigger a formatting component;
the formatting component, configured to read all files in the file system, and store the read files in a memory and/or a storage area, not managed by the file system, in the flash; format the file system; and trigger the initialization component to reinitialize the file system according to the file system type supported by the version file to be run;
a storage component, configured to store the stored files in the file system after the initialization component reinitializes the file system, and trigger the execution component; and
the execution component, configured to run the version file to be run.
